# FASCICULE DE BREVET EUROPEEN

(11) **EP 2 460 728 B1**
(45) Date de publication et mention de la délivrance du brevet: **07.10.2015**
(21) Numéro de dépôt: 11191206.9
(22) Date de dépôt: 29.11.2011
(51) Int. Cl.: B64D 25/20

(54) **Procédé et dispositif d'aide à la localisation d'une épave d'aéronef immergée dans une étendue d'eau de mer.**
Verfahren und Hilfsvorrichtung zur Lokalisierung eines Wracks eines Luftfahrzeugs in den Tiefen einer großen Meereswasserfläche
Method and device to help locate an aircraft wreck submerged in an expanse of sea water.

(30) Priorité: 06.12.2010 FR 1060115
(43) Date de publication de la demande: 06.06.2012
(73) Titulaire: Airbus Operations SAS, 31060 Toulouse (FR)
(72) Inventeur: Fabre, Christian, 31170 TOURNEFEUILLE (FR); Bignolais, Alain, 31490 LEGUEVIN (FR)
(74) Mandataire: Gevers France

(56) Documents cités:
- US-A- 2 470 783
- US-A- 2 778 332
- US-A- 3 016 969
- US-A- 3 051 420
- US-B1- 6 260 508

## Description

La présente invention concerne un procédé et un dispositif d'aide à la localisation d'une épave d'un aéronef, en particulier d'un avion de transport, qui est immergée dans une étendue d'eau de mer, telle qu'une mer ou un suite à un crash.

L'art antérieur du document US-B-6 260 508 divulgue une aide de localisation d'une épave d'aéronef moyennant une balise éjectable.

On sait que, par règlementation, des balises de détresse sont installées sur les aéronefs, afin de permettre en cas de crash une détection de l'épave par des équipes de secours, et la récupération des enregistreurs de vol, communément appelés boîtes noires.

Ces boîtes noires sont utilisées sur les aéronefs pour enregistrer les informations principales liées au vol. Leur analyse réalisée a posteriori après un incident ou un accident doit permettre d'en déterminer les causes. Il existe deux types de boîtes noires :
- un enregistreur des conversations dans le poste de pilotage, de type CVR (« Cockpit Voice Recorder » en anglais), qui enregistre les conversations sol-bord, mais également les conversations entre les membres d'équipage dans le poste de pilotage ; et
- un enregistreur numérique de données de vol, de type DFDR (« Digital Flight Data Recorder » en anglais), qui enregistre des données techniques du vol, telles que la trajectoire, l'altitude, l'attitude, la vitesse,...

L'évolution des technologies et la miniaturisation rendent, à présent, possible la réalisation d'enregistreurs combinés (DFDR et CVR) qui devront prochainement entraîner une modification de la réglementation associée. Le nombre de paramètres enregistrés dépend des caractéristiques de la boîte de noire. Si vingt-huit paramètres représentent généralement le minimum requis, les avions les plus récents peuvent être équipés de boîtes noires capables d'enregistrer jusqu'à mille trois cents données.

Ces deux boîtes noires sont généralement installées à l'arrière de l'aéronef, dans une zone qui est en principe la moins exposée lors d'un impact avec le sol ou avec une surface d'eau. De plus, elles sont conçues pour ne pas être détruites lors d'une catastrophe aérienne. Les données enregistrées sont protégées par trois couches de matériaux, destinées à assurer leur survie à des chocs, à un incendie et/ou à une immersion profonde.

Chaque boîte noire est, en outre, équipée d'une balise, de type ULB (« Underwater Locator Beacon » en anglais), qui se déclenche automatiquement en cas de crash de l'aéronef sur une surface solide ou liquide et qui émet, toutes les secondes et pour une durée minimale de 30 jours, un signal à ultrasons omnidirectionnel sur une fréquence de 37,5 kHz à 160 dB, afin d'aider à la localisation de l'aéronef. Ce signal est captable d'être détecté jusqu'à une profondeur d'environ 6000 mètres, grâce en particulier à l'utilisation d'hydrophones passifs spécifiques, qui sont remorqués derrière des navires de secours déployés sur la zone de l'accident.

Toutefois, si l'aéronef accidenté est immergé dans une zone où le sol marin est fortement accidenté, ou s'il est profondément enfoui dans un sol meuble, ou bien si des éléments métalliques importants sont présents dans la zone considérée, il est possible que la détection par les équipes de sauvetage des signaux émis par la balise de détresse soit extrêmement difficile, voire quasiment impossible. Cela constitue un réel problème pour les compagnies aériennes, les fabricants d'aéronefs et encore plus pour les familles des victimes de l'accident.

La présente invention a pour objet de remédier à ces inconvénients. Elle concerne un aéronef, en particulier un avion de transport, comportant un dispositif automatique d'aide à la localisation d'une épave de l'aéronef, qui est immergée dans une étendue d'eau de mer (mer ou océan), notamment suite à un crash.

A cet effet, selon l'invention, ledit aéronef comportant un dispositif d'aide à la localisation d'une épave de l'aéronef immergée dans une étendue d'eau de mer, ledit dispositif comportant au moins une balise qui est apte à émettre des signaux susceptibles d'être détectés à distance et qui est installée à l'intérieur de l'aéronef, et des moyens pour éjecter automatiquement ladite balise qui est flottante hors du fuselage de l'aéronef, lors d'une immersion de ce dernier, ainsi que des moyens pour déclencher automatiquement l'émission desdits signaux après ladite éjection, est remarquable en ce que lesdits moyens d'éjection comportent un système à piston pourvu d'un tube d'éjection équipé d'un piston, le piston comprenant un bouchon de poinçonnement pour le poinçonnement de la peau de l'aéronef afin de générer une ouverture dans le fuselage, le piston étant creux et comprenant un logement dans lequel est logée au moins la balise, et en ce que, lorsque ledit piston arrive en fin de course, il vient en butée sur le tube d'éjection de manière à éviter au piston d'être éjecté de la structure de l'aéronef, le bouchon de poinçonnement et la balise étant alors éjectés, simultanément et séparément.

Ainsi, grâce à l'invention, lors ou juste après l'impact avec la surface, durant la phase d'immersion, la balise est éjectée hors du fuselage de l'aéronef. De plus, comme cette balise est flottante, elle remonte en direction de la surface au-dessus de l'épave de l'aéronef, ce qui permet de faciliter la détection des signaux qu'elle émet alors et ainsi d'aider à la localisation de l'épave.

Par conséquent, le dispositif conforme à l'invention est un dispositif d'émission de signaux de détresse, qui est à installer sur l'aéronef en supplément des dispositifs existant déjà et qui permet d'augmenter très significativement la probabilité de détection d'une épave immergée suite à un accident au-dessus du domaine maritime.

Dans un premier mode de réalisation, le dispositif conforme à l'invention comporte des moyens pour libérer complètement la balise de l'aéronef après son éjection hors du fuselage lors d'une immersion, de sorte qu'après son éjection, elle remonte directement à la surface où elle peut être plus facilement détectée et localisée.

Dans un second mode de réalisation, ledit dispositif comporte, de plus, des moyens de liaison, de préférence un câble ou une drisse, pour maintenir la balise, au moins temporairement, liée à l'aéronef, après son éjection hors du fuselage lors d'une immersion.

Ainsi, lorsque l'aéronef repose sur le fond de l'étendue d'eau de mer, la balise qui est toujours liée à la structure de l'aéronef flotte, au-dessus de l'aéronef, à une distance de ce dernier qui dépend de la longueur des liens (ou drisse) utilisés. Lorsque la profondeur à laquelle repose l'aéronef est importante, le fait de dégager la balise émettrice du fond de l'étendue d'eau, par exemple de quelques centaines de mètres, permet de favoriser fortement la probabilité de détection, car elle n'est alors pas prisonnière du fuselage métallique de l'aéronef, susceptible de diminuer significativement l'efficacité du signal de détresse, et ceci plus particulièrement si le fuselage est enfoncé dans un sol meuble ou si le relief local est très accidenté.

Dans un mode de réalisation particulier, ledit dispositif comporte, de plus, des moyens de détection d'une immersion (notamment suite à un crash), et lesdits moyens d'éjection éjectent la balise hors du fuselage, lors de la détection d'une immersion par lesdits moyens de détection.

En outre, dans un mode de réalisation particulier, lesdits moyens de détection comportent des moyens de mesure de valeurs courantes d'au moins un paramètre relatif à l'aéronef ou à son environnement, par exemple l'altitude ou la pression environnante liée à une immersion de l'aéronef, et des moyens pour comparer les valeurs courantes mesurées à une valeur de seuil, une immersion étant détectée lorsqu'une valeur courante mesurée dépasse ladite valeur de seuil, et ceci par exemple pendant une durée prédéterminée.

Pour la mise en oeuvre de la présente invention, on peut utiliser différents types de balises, et notamment :
- une radiobalise sous-marine de détresse, de type ULB (« Underwater Locator Beacon » en anglais), qui permet d'émettre un signal sous-marin, mais qui nécessite pour sa détection la présence de navires (bateaux ou sous-marins) équipés de sondeurs à une proximité relative ;
- un émetteur/localisateur de détresse, de type ELT (« Emergency Locator Transmitter » en anglais), qui émet uniquement en surface et qui permet un relevé très précis d'une position géographique, grâce à un réseau COSPAS-SARSAT qu'elle utilise dès son déclenchement.

Dans un mode de réalisation préféré, pour augmenter son efficacité, la présente invention utilise au moins deux balises flottantes, et de préférence deux balises flottantes qui sont mises en oeuvre différemment. A titre d'exemple, elle peut utiliser :
- deux balises de type ULB, dont au moins l'une reste liée à l'aéronef par l'intermédiaire d'une drisse, préférentiellement réalisée en fibre d'aramide, pouvant atteindre une longueur de plusieurs centaines de mètres. La drisse se déploie au fur et à mesure que l'aéronef s'enfonce dans les profondeurs, tandis que la balise tend à remonter vers la surface, du fait de sa flottabilité ;
- une balise de type ULB et une balise de type ELT. La balise ULB reste liée à la structure de l'aéronef, tandis que la balise ELT remonte à la surface afin d'émettre le signal de détresse et la position de l'impact. Dans ce cas, la balise ELT permet de tracer la dérive potentielle des débris flottant au fil des courants.

Dans le cadre de la présente invention, chaque dispositif comporte de préférence une balise. Toutefois, il est également envisageable qu'un dispositif comporte simultanément deux balises ou plus.

Le dispositif conforme à l'invention peut être alimenté électriquement par l'aéronef. Toutefois, dans un mode de réalisation particulier, ledit dispositif comporte une source d'énergie autonome de manière à être complètement indépendant.

Par ailleurs, de façon avantageuse :
- ladite balise peut être pourvue de moyens auxiliaires permettant d'aider à sa localisation, lorsqu'elle flotte à la surface de l'étendue d'eau de mer, par exemple un marqueur de type colorant, un fumigène ou une balise auxiliaire notamment de type GPS ; et/ou
- ladite balise est montée dans une zone non pressurisée de l'aéronef, située dans sa partie arrière supérieure, dans une zone qui est en principe la moins exposée lors d'un impact avec le sol ou avec une surface d'eau.

La présente invention concerne également un procédé d'aide à la localisation d'une épave d'aéronef immergée dans une étendue d'eau de mer, ledit procédé utilisant au moins une balise qui est apte à émettre des signaux susceptibles d'être détectés à distance et qui est installée à l'intérieur de l'aéronef.

Selon l'invention, ledit procédé est remarquable en ce que, lors d'une immersion de l'aéronef, on éjecte automatiquement ladite balise qui est flottante hors du fuselage dudit aéronef, et après ladite éjection, on déclenche automatiquement l'émission desdits signaux par ladite balise et on réalise l'éjection à l'aide d'un système à piston pourvu d'un tube d'éjection équipé d'un piston, le piston comprenant un bouchon de poinçonnement pour le poinçonnement de la peau de l'aéronef afin de générer une ouverture dans le fuselage, ledit piston étant creux et comprenant un logement dans lequel est logée au moins la balise, et en ce que, lorsque ledit piston arrive en fin de course, il vient en butée sur le tube d'éjection de manière à éviter au piston d'être éjecté de la structure de l'aéronef, le bouchon de poinçonnement et la balise étant alors éjectés, simultanément et séparément, hors de l'aéronef au travers de ladite ouverture.

Les figures du dessin annexé feront bien comprendre comment l'invention peut être réalisée. Sur ces figures, des références identiques désignent des éléments semblables.

La figure 1 est le schéma synoptique d'un dispositif d'aide à la localisation conforme à l'invention.

Les figures 2A à 2E présentent schématiquement différentes situations successives lors d'un crash d'un aéronef et son immersion dans une étendue d'eau de mer.

Les figures 3A à 6C montrent schématiquement différents moyens d'éjection d'une balise.

Les figures 7A et 7B, 8A et 8B montrent schématiquement deux moyens de libération d'un câble de liaison.

La figure 9 montre schématiquement un emplacement préféré d'une balise conforme à l'invention sur un avion.
Le dispositif 1 conforme à l'invention et représenté schématiquement sur la figure 1 est destiné à aider à la localisation d'une épave d'un aéronef AC, en particulier d'un avion de transport gros porteur, qui est immergé dans une étendue d'eau de mer (mer ou océan), suite à un crash.

Pour ce faire, ledit dispositif 1 comporte au moins une balise 2 qui comprend des moyens 3 usuels, aptes à émettre des signaux (sous forme d'ondes) susceptibles d'être détectés à distance, et qui est installée à l'intérieur de l'aéronef AC.

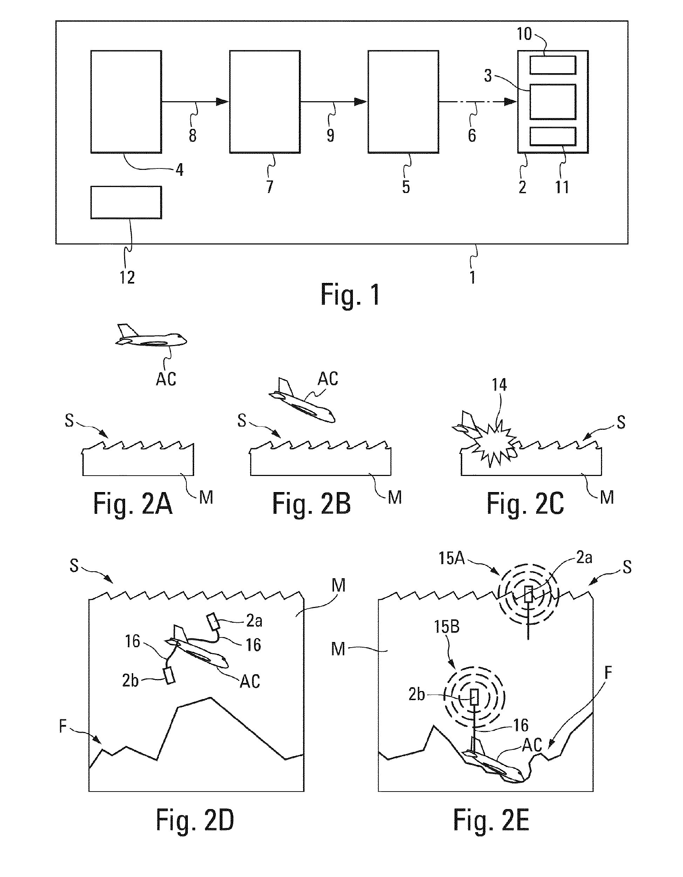

Selon l'invention, ladite balise 2 est réalisée de manière à pouvoir flotter, par exemple en étant enveloppée dans un matériau appropriée, notamment de type mousse, et ledit dispositif 1 comporte, de plus :
- des moyens 4 qui sont susceptibles de détecter automatiquement une immersion de l'aéronef AC, suite à un crash ;
- des moyens 5 pour éjecter automatiquement ladite balise 2 hors du fuselage de l'aéronef AC, lors de la détection d'une immersion par lesdits moyens de détection 4, comme illustré par une flèche 6 en traits mixtes sur la figure 1 ;
- une unité de commande 7 qui, lorsqu'elle reçoit un signal de détection des moyens 4 (via une liaison 8), envoie un ordre d'éjection aux moyens 5 (via une liaison 9) ; et
- des moyens 10 pour déclencher automatiquement lesdits moyens 3 pour qu'ils l'émettent des signaux après ladite éjection.

Sur les figures 2A à 2E, on a représenté différentes situations successives lors d'un vol d'un aéronef AC (équipé d'un dispositif 1 conforme à l'invention), au cours duquel se produit un crash sur une étendue M d'eau de mer (mer ou océan). Plus précisément,
- sur la figure 2A, l'aéronef AC vole de façon normale ;
- sur la figure 2B, un incident ou accident important s'est produit entraînant la perte du contrôle de l'aéronef AC et sa chute ; et
- sur la figure 2C, on a représenté l'impact (symbole 14) de l'aéronef AC sur la surface S de l'étendue d'eau M.

Comme, grâce à l'invention, lors ou juste après l'impact avec la surface S durant la phase d'immersion, la balise 2 est éjectée hors du fuselage de l'aéronef AC, et comme cette balise 2 est flottante, elle remonte en direction de la surface S au-dessus de l'épave de l'aéronef AC, ce qui permet de faciliter la détection des signaux qu'elle émet alors et ainsi d'aider à la localisation de l'épave. Ceci est représenté sur la figure 2D, pour une utilisation de deux balises 2a et 2b, en particulier pour augmenter l'efficacité.

Dans le cadre de la présente invention, chaque dispositif 1 comporte de préférence une balise 2. Toutefois, il est également envisageable qu'un dispositif 1 comporte simultanément deux balises 2 ou plus.

Le dispositif 1 conforme à l'invention peut être formé de manière à complètement libérer l'une des balises de l'aéronef AC après son éjection hors du fuselage lors d'une immersion, de sorte qu'après son éjection, elle remonte directement à la surface S où elle peut être plus facilement détectée et localisée, comme représenté pour la balise 2a sur la figure 2E qui émet des signaux illustrés par un symbole 15A.

Ledit dispositif 1 peut également comporter des moyens de liaison 16, de préférence des câbles ou des drisses, pour maintenir la balise liée à l'aéronef, après son éjection hors du fuselage lors d'une immersion, comme représenté pour la balise 2b sur la figure 2E qui émet des signaux illustrés par un symbole 15B. Ainsi, lorsque l'aéronef AC repose sur le fond F de l'étendue d'eau M, la balise 2b qui est toujours liée à la structure de l'aéronef AC flotte, au-dessus de l'aéronef AC, à une distance de ce dernier qui dépend de la longueur des liens 16 (ou drisse) utilisés. Lorsque la profondeur à laquelle repose l'aéronef AC est importante, le fait de dégager la ou les balises émettrices du fond de l'étendue d'eau, par exemple de quelques centaines de mètres, permet de favoriser fortement la probabilité de détection, car elles ne sont pas prisonnières du fuselage métallique de l'aéronef AC, susceptible de diminuer significativement l'efficacité du signal de détresse, plus particulièrement si le fuselage est enfoncé dans un sol meuble ou si le relief local est très accidenté.

Par conséquent, le dispositif 1 conforme à l'invention est un dispositif d'émission de signaux de détresse (15A, 15B), qui est à installer sur l'aéronef AC en supplément des dispositifs existant déjà et qui permet d'augmenter très significativement la probabilité de détection d'une épave immergée suite à un accident au-dessus du domaine maritime.

Pour la mise en oeuvre de la présente invention, on peut utiliser différents types de balises 2, et notamment :
- une balise ULB (« Underwater Locator Beacon » en anglais), qui permet d'émettre un signal sous-marin, mais qui nécessite pour sa détection la présence de navires (bateaux ou sous-marins) équipés de sondeurs à une proximité relative ;
- une balise ELT (« Emergency Locator Transmitter » en anglais), qui émet uniquement en surface et qui permet un relevé très précis d'une position géographique, grâce à un réseau COSPAS-SARSAT qu'elle utilise dès son déclenchement.

Dans un mode de réalisation préféré, pour augmenter son efficacité, la présente invention utilise au moins deux balises flottantes 2 qui sont mises en oeuvre différemment. A titre d'exemple, elle peut utiliser :
- deux balises ULB, dont au moins une reste liée à l'aéronef AC par l'intermédiaire d'une drisse 16, préférentiellement réalisée en fibre d'aramide, pouvant atteindre une longueur de plusieurs centaines de mètres. La drisse se déploie au fur et à mesure que l'aéronef AC s'enfonce dans les profondeurs, tandis que la balise tend à remonter vers la surface S du fait de sa flottabilité ; ou
- une balise ULB et une balise ELT. La balise ULB reste liée à la structure de l'aéronef AC, tandis que la balise ELT remonte à la surface S afin d'émettre le signal de détresse et la position de l'impact, comme représenté par exemple sur la figure 2E. Dans ce cas, la balise ELT permet de tracer la dérive potentielle des débris flottant au fil des courants.

Comme indiqué ci-dessus, chaque balise 2 fait de préférence partie d'un dispositif 1 qui lui est propre, bien qu'il soit également envisageable d'associer un seul dispositif 1 à plusieurs balises 2.

Dans le cas d'un mode de mise en oeuvre avec deux balises ULB (ou une balise ULB et une balise ELT), si la détection des balises 2, et donc de l'épave de l'aéronef AC n'est pas réalisée dans un temps raisonnable, défini et réglé initialement au moment de l'installation du dispositif 1 à bord de l'aéronef AC, typiquement quelques jours, la drisse 16 d'une 2a des balises est automatiquement coupée ou détachée, afin de permettre la remontée de la balise 2a concernée à la surface S, comme représenté sur la figure 2E.

Une fois à la surface S, une balise 2, qu'elle ait été relâchée juste après le crash ou quelques jours plus tard, est soumise à l'influence des courants océaniques, de la houle et des vents locaux, et va donc dériver en conséquence par rapport à la verticale du point où se trouve l'aéronef AC. Toutefois, l'influence des courants marins, de la houle et de la force des vents dominants sur la trajectoire d'un objet flottant peut être estimée avec une relative précision. Une fois la balise 2 récupérée et connaissant le temps écoulé entre l'accident et le moment où la balise 2 a été relâchée, il est possible de déduire une trajectoire probable de la balise 2 en surface, et de ce fait, de localiser la zone théorique du crash. Dans tous les cas, même si la détection précise du lieu de l'épave n'est pas toujours possible du fait de l'imprécision évidente sur la trajectoire de la balise flottante 2, une zone de recherche beaucoup plus limitée peut néanmoins être déterminée.

Dans un mode de réalisation particulier, la balise 2 est pourvue de moyens auxiliaires 11 permettant d'aider à sa localisation, lorsqu'elle flotte à la surface S de ladite étendue d'eau de mer, par exemple un marqueur de type colorant, un fumigène et/ou une balise auxiliaire usuelle notamment de type GPS.

Le dispositif 1 conforme à l'invention peut faire partie d'un système (non représenté) d'aide à la localisation d'une épave d'aéronef immergée, qui comporte, en plus dudit dispositif 1 destiné à émettre lors d'une immersion des signaux susceptibles d'être détectés à distance, des moyens usuels (non représentés) qui sont aptes à détecter de tels signaux. En particulier, la détection des balises de type ULB, par des équipes de secours déployées sur la zone de crash, peut être réalisée à l'aide de moyens de recherche utilisés, de façon usuelle, pour la détection des boîtes noires.

Par ailleurs, les moyens 4 et 5 du dispositif 1 qui sont destinés, notamment, à détecter automatiquement une immersion de l'aéronef AC peuvent être connectés à un circuit électrique de ce dernier. Dans ce cas, l'éjection des balises 2 et le déclenchement de leur émission sont commandés par un signal issu de l'aéronef AC, ce qui implique que ce dernier soit encore capable d'envoyer un tel signal.

Aussi, dans un mode de réalisation particulier, ledit dispositif 1 comporte une source d'énergie autonome 12 de manière à être complètement indépendant. Ledit dispositif 1 possède ainsi sa propre source d'énergie, des moyens 4 de détection du crash, ainsi que des moyens de commande 7 permettant le déclenchement des diverses séquences : éjection des balises, début d'émission, coupure de la drisse 16 au bout d'un certain temps.

Dans le cadre de la présente invention, les moyens 4 peuvent réaliser la détection de l'immersion (suite au crash) de diverses manières, par exemple par le traitement de paramètres mesurés, tel un choc ou une décélération brutale, l'attitude générale de l'aéronef AC ou encore l'altitude (utilisée de façon combinée avec d'autres paramètres). Cependant le paramètre le plus pertinent à utiliser est la pression environnante liée à l'immersion de l'aéronef AC.

Dans le cas d'un déclenchement par pression hydrostatique, les moyens 5 d'éjection de la balise 2 peuvent être déclenchés si la pression mesurée par un capteur interne au système excède 6 bars, ce qui correspond à une profondeur d'immersion de 50 mètres environ.

Toutefois, un déclenchement de l'éjection de la balise 2 basé sur deux informations (ou plus) fournies, par exemple, par deux capteurs de pression ou par un capteur de pression et un accéléromètre, est préférable pour des raisons de sécurité et de fiabilité.

Par ailleurs, les moyens 5 d'éjection de la balise 2 peuvent être réalisés de différente manières.

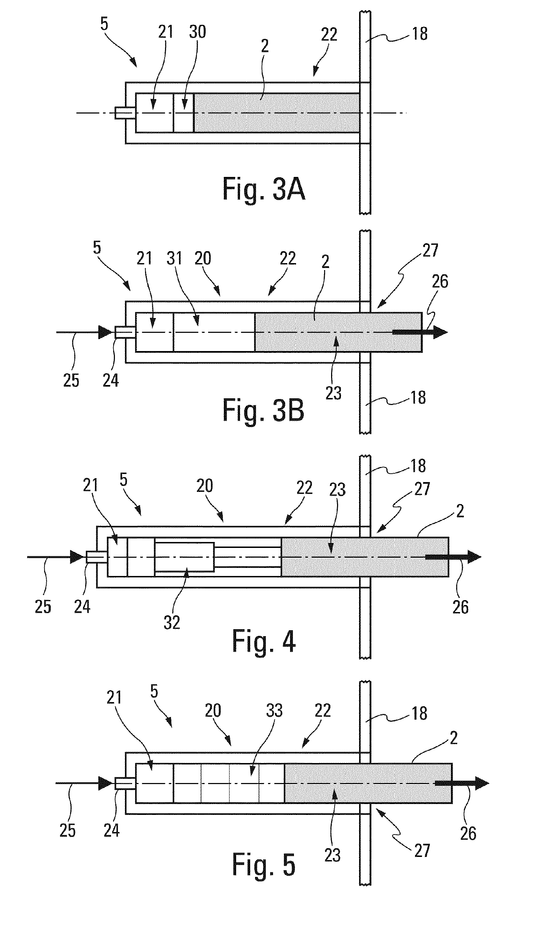

Les figures 3A à 6C montrent schématiquement, à titre d'illustration, différents moyens d'éjection.

Une balise 2 peut être éjectée de la structure 18 de l'aéronef AC par l'action mécanique d'un système 20 à piston, dont le mouvement est assuré par un moteur électrique, une pressurisation hydraulique ou encore pneumatique. Toutefois, la solution la plus intéressante, en prenant en compte les contraintes de fiabilité, de sécurité, de masse minimale, de complexité et de taille, est l'utilisation d'un générateur de gaz 21 pour la pressurisation pneumatique du tube d'éjection (ou de lancement) 22, comme représenté sur les figures 3A à 6C. Cette solution permet de disposer d'une énergie très élevée dans un temps très court et avec une compacité optimale.

Un bloc de matériau énergétique (communément appelé propergol solide), peut générer en brûlant dans une chambre de combustion dédiée, une forte quantité de gaz inerte, principalement constitué d'azote, de gaz carbonique et de vapeur d'eau. La chambre de combustion communique avec la zone à pressuriser via une tuyère dimensionnée de telle sorte que la combustion du bloc se fasse sous une pression suffisante pour assurer la production de la quantité nécessaire de gaz dans le délai imparti pour l'éjection, c'est-à-dire en quelques dixièmes de secondes environ.

Le tube d'éjection 22 est fixé de façon très rigide contre la peau 18 de l'aéronef AC ou à proximité de celle-ci, perpendiculairement à la surface interne, et préférentiellement dans une zone non pressurisée de l'aéronef AC.

Une fois électriquement initiée à l'aide d'une interface de commande 24, comme illustré par une flèche 25 sur les figures 3B, 4 et 5, la combustion du bloc pyrotechnique génère une grande quantité de gaz dans le tube d'éjection 22. La pression de ce gaz s'exerce sur l'un des côtés du piston 23 (qui contient la balise 2 à éjecter), autorisant le déplacement de celui-ci dans le tube d'éjection 22, comme illustré par une flèche 26.

L'autre face du piston 23 comprend un bouchon de forme appropriée de telle sorte que le déplacement du piston 23 va permettre le poinçonnement de la peau 18 de l'aéronef AC par ce bouchon et la sortie du piston 23 à travers l'orifice 27 ainsi crée.

Ainsi, l'agencement de ces moyens ne nécessite que très peu de modifications, pour être installés à bord d'un aéronef AC existant ou en cours de définition, ce qui limite les impacts à la fois en terme de certification (pas de modification importante de la structure ou des systèmes de l'aéronef AC) et en terme de masse supplémentaire, puisque le surpoids apporté par le dispositif 1 est faible.

A titre d'illustration :
- dans l'exemple des figures 3A et 3B, le tube d'éjection 22 est muni d'une chambre de combustion 30 ;
- dans l'exemple de la figure 4, le tube d'éjection 22 est muni d'un vérin télescopique 32 qui se déploie sous l'effet des gaz de combustion du bloc de propergol ; et
- dans l'exemple de la figure 5, le tube d'éjection 22 est muni d'un coussin (sac) gonflable 33 qui se déploie également sous l'effet des gaz de combustion du bloc de propergol.

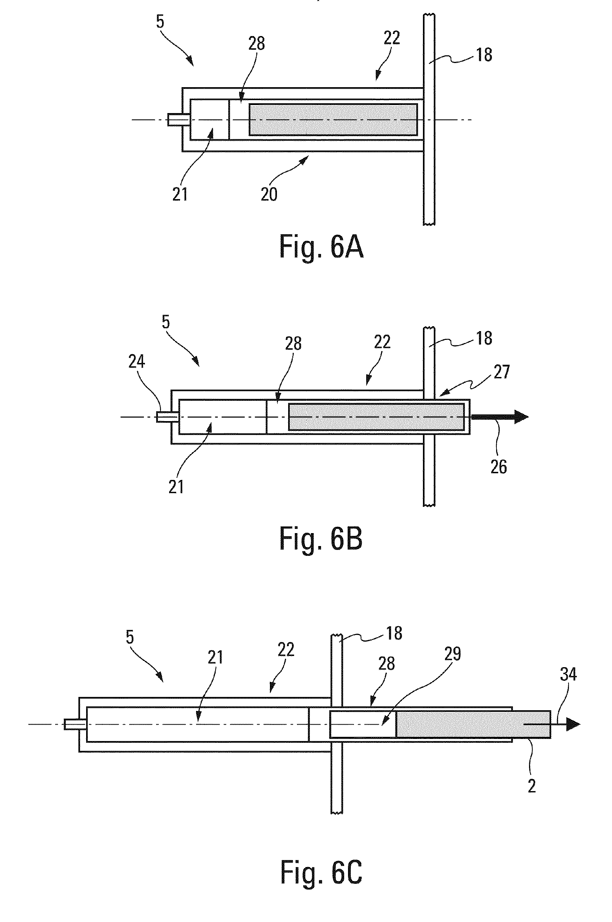

En outre, dans un mode de réalisation de l'invention, représenté sur les figures 6A, 6B et 6C, le tube d'éjection 22 de la balise 2 est équipé préférentiellement d'un piston creux 28 qui comprend un logement 29 dans lequel sont logés la balise 2 et le cas échéant la drisse (non représentée), de façon notamment à protéger la balise 2 pendant la phase d'éjection.

Il est également possible d'envisager l'installation d'une trappe (non représentée) pratiquée dans la peau de l'aéronef AC, qui permet le passage de la balise 2 au moment de l'éjection, ce qui évite la perforation de la peau 18 de l'aéronef AC et permet l'utilisation d'un système d'éjection plus léger et plus simple. L'ouverture de la trappe peut, soit être commandée en même temps que l'éjection de la balise 2 mais par un système dédiée, soit être réalisée par rupture nette sous l'effet d'un piston.

Lorsque le piston 28 arrive en fin de course, il vient en butée sur le tube d'éjection grâce un épaulement spécifiquement réalisé de manière à éviter au piston 28 d'être éjecté de la structure de l'aéronef AC, comme représenté sur la figure 6C. Par effet d'inertie, le bouchon de poinçonnement et la balise 2 sont alors éjectés (flèche 34), simultanément et séparément, à l'extérieur de l'aéronef AC. Le cas échéant, la drisse 16 se déroule au fur et à mesure que la balise 2 tend à remonter vers la surface S du fait de sa flottabilité. La drisse 16 est reliée d'un côté à la balise 2 et de l'autre côté au système d'éjection et reste donc solidaire de la structure de l'aéronef AC.

Afin de limiter la course du piston, il est possible d'utiliser un générateur de gaz à deux étages. Le premier étage assure la pressurisation du tube pour satisfaire l'opération de poinçonnage de la peau. Le piston a donc une course réduite de quelques centimètres uniquement. Une fois cette découpe effectuée, le deuxième étage du générateur de gaz assure la pressurisation de l'intérieur du piston creux et l'éjection de la balise 2.

Lorsque la présente invention utilise deux balises, dont l'une est libérée, la deuxième balise peut soit, rester liée à l'aéronef AC, soit être libérée également de la même façon que la première balise, avec éventuellement un intervalle de temps entre les deux libérations.

Dans le cas où une seule balise est libérée, le choix de la balise 2 dont la drisse 16 est coupée ou détachée peut être fait par conception de la balise 2, c'est-à-dire qu'une seule balise sur les deux est équipée d'un système de coupure ou de détachement de la drisse, ou au moment de la libération, on ne relâche par exemple que la balise dont la drisse est sous tension, ce qui signifie que la drisse n'est pas bloquée mais tirée par la balise. Dans ce dernier cas, on évite ainsi de libérer une balise dont la drisse serait coincée par une partie de l'épave ou par le relief et qui ne remonterait pas de ce fait en surface. L'adoption de cette logique de choix de balise à libérer, nécessite l'installation d'un système de mesure de tension de la drisse associé à un calculateur capable de choisir la balise à détacher et d'envoyer en conséquence le signal au système de libération à la seule balise concernée.

Pour libérer la balise 2, il est préférable que la drisse 16 soit coupée ou détachée au niveau des moyens 5 d'éjection de la balise 2 et donc du côté de l'épave de l'aéronef AC, pour des raisons de moindre complexité, comme représenté sur la figure 2E pour la balise 2a.

Quoique un peu plus complexe à réaliser du fait de la nécessité d'introduire au niveau de la balise 2 un système de libération de la drisse et un système de commande dédié, ce qui implique une augmentation de la masse de la balise 2 impactant sa flottabilité et son système d'éjection, la libération de la drisse 16 au niveau de la balise 2 présente cependant l'avantage d'éviter à la drisse 16 de remonter avec la balise 2, ce qui permet d'éliminer la problématique d'un éventuel accrochage de la drisse 16 à une partie de l'épave de l'aéronef AC ou à un relief.

Dans le cadre de la présente invention, le système 35, 36 de libération des moyens de liaison, peut utiliser diverses technologies et être réalisé de différentes manières. En particulier, il peut comporter :
- un simple crochet ou anneau, dont l'ouverture est commandée électriquement au bout d'un temps défini préalablement ;
- un dispositif d'ouverture ou de rupture basé sur l'attaque chimique d'un composant. Une quantité d'acide, par exemple, peut être libérée localement sur un composant du système d'attache de la drisse 16 au moment de l'éjection de la balise 2. L'attaque chimique conduit au bout d'un certain temps à la libération de la drisse ; et
- un système pyrotechnique 35, 36 qui offre l'avantage d'une grande fiabilité.

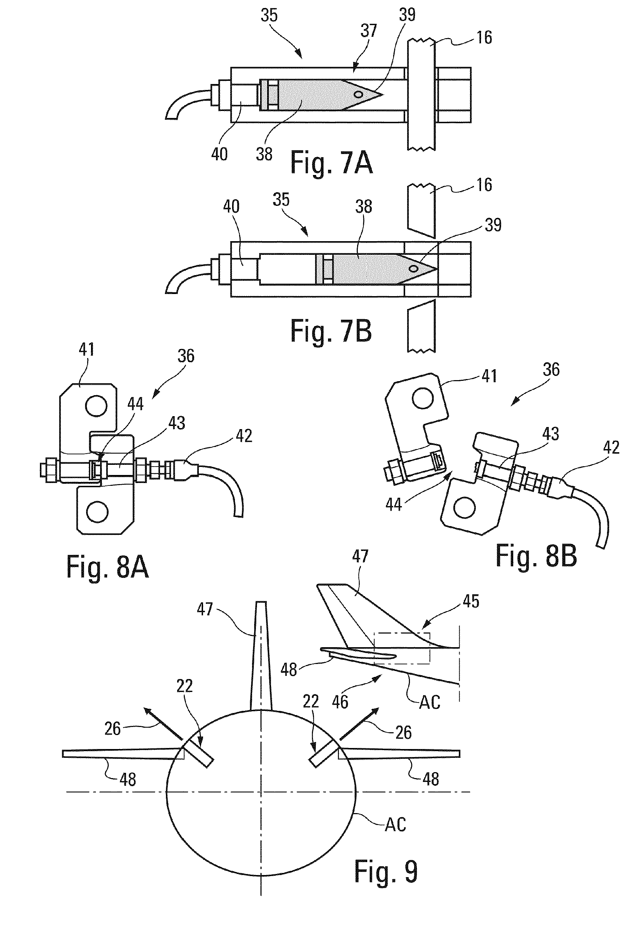

Il peut s'agir :
- d'un système pyrotechnique 35 de libération par coupure directe de la drisse 16, comme représenté sur les figures 7A et 7B (représentant respectivement les situations avant et juste après la libération). Ce système 35 comporte, notamment, un corps creux 37 dans lequel est logé un piston 38 muni d'une pointe appropriée 39 permettant de couper la drisse 1 6, ainsi que d'une cartouche 40 usuelle ; ou
- d'un système pyrotechnique 36 de libération par coupure de manille, comme représenté sur les figures 8A et 8B. Sur ces figures 8A et 8B (correspondant respectivement aux situations avant et juste après la libération), on a représenté notamment un corps de manille 41, une cartouche 42, un tirant 43, et la zone de rupture 44.

Une autre possibilité consiste à prévoir une dissolution d'une partie de l'attache ou de la drisse 16 directement par l'eau de mer.

Bien entendu, dans le cas où au moins l'une des balises n'est pas liée à l'aéronef AC, elle remonte directement à la surface après son éjection. Dans ce cas, aucun système de coupure n'est nécessaire du fait de l'absence de drisse sur cette balise.

Par ailleurs, le dispositif 1 conforme l'invention est installé, préférentiellement, dans une zone non pressurisée de l'aéronef AC. Ceci est lié au fait que le montage du dispositif 1 doit être réalisé au plus près la peau de l'aéronef AC, et la présence d'habillage commercial peut complexifier inutilement son installation. De plus, en cas de déclenchement intempestif en vol, évènement dont la probabilité est extrêmement faible du fait de l'utilisation de technologies éprouvées associées à une logique d'activation robuste, il n'y aurait pas de dépressurisation de la cabine.

La zone d'installation la plus appropriée est la partie supérieure arrière 45 de l'aéronef AC, juste après la paroi bombée (cloison forte) délimitant la fin de la zone pressurisée, comme représenté sur la figure 9 qui montre la queue 46 de l'aéronef AC, pourvue de la dérive 47 et des empennages horizontaux 48. Cette zone extrême arrière est généralement la moins endommagée après un crash et offre, dans quasiment tous les aéronefs AC, un espace libre suffisant pour l'installation du dispositif 1 conforme l'invention. De plus, l'accès à cette zone est facile, pour l'installation du dispositif 1 et pour des opérations de maintenance éventuelles. Cette zone abrite également l'enregistreur numérique de données de vol, de type DFDR, qui est la boîte noire enregistrant les paramètres de vol, l'autre boîte noire étant située, le plus souvent, devant la paroi bombée en zone cargo pressurisée.

En outre, l'installation du dispositif 1 conforme l'invention dans la partie supérieure de cette zone arrière 45 non pressurisée est préférable pour des raisons de sécurité. En effet, en cas de déclenchement intempestif au sol dudit dispositif 1, la balise 2 serait éjectée vers le haut et présenterait, de ce fait, un risque beaucoup plus faible pour les personnes susceptibles d'évoluer à proximité de l'aéronef AC. De plus, l'évacuation par le haut des balises 2 évite de rendre le dispositif 1 inopérant en cas d'amerrissage forcé. En effet, lors d'un amerrissage réussi, la décélération peut être insuffisante pour déclencher l'éjection mais peut faire subir une déformation à la structure inférieure, risquant de bloquer le dispositif dans l'aéronef AC.

Par ailleurs, cette zone présente la particularité, sur les aéronefs AC possédant un plan horizontal mobile, de se remplir rapidement en cas d'immersion, en raison de l'ouverture existant dans le fuselage arrière pour la mobilité du plan arrière, ce qui permet de détecter ou confirmer la condition d'immersion.

## Revendications

1. Aéronef comportant un dispositif d'aide à la localisation d'une épave de l'aéronef immergée dans une étendue d'eau de mer, ledit dispositif (1) comportant au moins une balise (2) qui est apte à émettre des signaux (15A, 15B) susceptibles d'être détectés à distance et qui est installée à l'intérieur de l'aéronef (AC), et des moyens (5) pour éjecter automatiquement ladite balise (2) qui est flottante hors du fuselage de l'aéronef (AC), lors d'une immersion de ce dernier, ainsi que des moyens (10) pour déclencher automatiquement l'émission desdits signaux (15A, 15B) après ladite éjection, **caractérisé en ce que** lesdits moyens d'éjection (5) comportent un système à piston pourvu d'un tube d'éjection (22) équipé d'un piston (28), le piston (28) comprenant un bouchon de poinçonnement pour le poinçonnement de la peau de l'aéronef (AC) afin de générer une ouverture (27) dans le fuselage (18), le piston (28) étant creux et comprenant un logement (29) dans lequel est logée au moins la balise (2), et **en ce que**, lorsque ledit piston (28) arrive en fin de course, il vient en butée sur le tube d'éjection (22) de manière à éviter au piston (28) d'être éjecté de la structure de l'aéronef (AC), le bouchon de poinçonnement et la balise (2) étant alors éjectés, simultanément et séparément.

2. Aéronef selon la revendication 1,
**caractérisé en ce qu'**il comporte, de plus, des moyens de liaison (16) pour maintenir la balise (2), au moins temporairement, liée à l'aéronef (AC), après son éjection hors du fuselage lors d'une immersion.

3. Aéronef selon la revendication 2,
**caractérisé en ce que** qu'il comporte, de plus, des moyens (35, 36) pour agir sur lesdits moyens de liaison (16) afin de libérer complètement la balise (2) de l'aéronef (AC).

4. Aéronef selon l'une quelconque des revendications précédentes,
**caractérisé en ce qu'**il comporte au moins deux balises flottantes (2a, 2b), des moyens pour libérer complètement l'une (2a) desdites balises de l'aéronef (AC) après éjection hors du fuselage lors d'une immersion, et des moyens pour maintenir l'autre (2b) desdites balises liée à l'aéronef (AC) après son éjection hors du fuselage lors d'une immersion.

5. Aéronef selon l'une quelconque des revendications précédentes,
**caractérisé en ce que** ladite balise (2) est pourvue de moyens auxiliaires (11) permettant d'aider à sa localisation, lorsqu'elle flotte à la surface (S) de ladite étendue d'eau de mer (M).

6. Aéronef selon l'une quelconque des revendications précédentes,
**caractérisé en ce qu'**il comporte, de plus, des moyens de détection (4) d'une immersion, et **en ce que** lesdits moyens d'éjection (5) éjectent la balise (2) hors du fuselage, lors de la détection d'une immersion par lesdits moyens de détection (4).

7. Aéronef selon la revendication 6,
**caractérisé en ce que** lesdits moyens de détection (4) comportent des moyens de mesure des valeurs d'au moins un paramètre relatif à l'aéronef (AC) ou à son environnement et des moyens pour comparer les valeurs mesurées à une valeur de seuil, une immersion étant détectée lorsqu'une valeur mesurée dépasse ladite valeur de seuil.

8. Aéronef selon l'une quelconque des revendications précédentes,
**caractérisé en ce qu'**il comporte, de plus, une source d'énergie autonome (12).

9. Aéronef selon l'une quelconque des revendications précédentes,
**caractérisé en ce que** ladite balise (2) est montée dans une zone non pressurisée de l'aéronef (AC), située dans sa partie arrière supérieure (45).

10. Procédé d'aide à la localisation d'une épave d'aéronef immergée dans une étendue d'eau de mer, ledit procédé utilisant au moins une balise (2) qui est apte à émettre des signaux (15A, 15B) susceptibles d'être détectés à distance et qui est installée à l'intérieur de l'aéronef (AC), procédé selon lequel lors d'une immersion de l'aéronef (AC), on éjecte automatiquement ladite balise (2) qui est flottante hors du fuselage dudit aéronef (AC), et après ladite éjection, on déclenche automatiquement l'émission desdits signaux (15A, 15B) par ladite balise (2),
**caractérisé en ce que** l'on réalise l'éjection à l'aide d'un système à piston pourvu d'un tube d'éjection (22) équipé d'un piston (28), le piston (28) comprenant un bouchon de poinçonnement pour le poinçonnement de la peau de l'aéronef (AC) afin de générer une ouverture (27) dans le fuselage (18), ledit piston (28) étant creux et comprenant un logement (29) dans lequel est logée au moins la balise (2), et **en ce que**, lorsque ledit piston (28) arrive en fin de course, il vient en butée sur le tube d'éjection (22) de manière à éviter au piston (28) d'être éjecté de la structure de l'aéronef (AC), le bouchon de poinçonnement et la balise (2) étant alors éjectés, simultanément et séparément, hors de l'aéronef (AC) au travers de ladite ouverture (27).

## Patentansprüche

1. Luftfahrzeug, welches eine Hilfsvorrichtung zur Lokalisierung eines Wracks des Luftfahrzeugs in den Tiefen einer Meereswasserfläche aufweist, wobei die Vorrichtung (1) wenigstens eine Bake (2), welche geeignet ist, Signale (15A, 15B) auszusenden, die aus der Ferne geortet werden können, und welche im Inneren des Luftfahrzeugs (AC) installiert ist, und Mittel (5) zum automatischen Ausstoßen der Bake (2), bei einem Eintauchen des Luftfahrzeugs (AC) ins Wasser, wobei die Bake (2) außerhalb des Rumpfes desselben schwimmt, sowie Mittel (10) zum automatischen Auslösen des Aussendens der Signale (15A, 15B) nach dem Ausstoßen aufweist, **dadurch gekennzeichnet, dass** die Ausstoßmittel (5) ein Kolbensystem aufweisen, das mit einem Ausstoßrohr (22) versehen ist, das mit einem Kolben (28) ausgestattet ist, wobei der Kolben (28) einen Stanzstopfen zum Durchstoßen der Außenhaut des Luftfahrzeugs (AC) umfasst, um eine Öffnung (27) im Rumpf (18) zu erzeugen, wobei der Kolben (28) hohl ist und eine Aufnahme (29) umfasst, in welcher wenigstens die Bake (2) aufgenommen ist, und dadurch, dass der Kolben (28), wenn er seine Endlage erreicht, am Ausstoßrohr (22) zur Anlage kommt, so dass vermieden wird, dass der Kolben (28) aus der Struktur des Luftfahrzeugs (AC) ausgestoßen wird, wobei der Stanzstopfen und die Bake (2) dann gleichzeitig und getrennt ausgestoßen werden.

2. Luftfahrzeug nach Anspruch 1, **dadurch gekennzeichnet, dass** es außerdem Verbindungsmittel (16) aufweist, um die Bake (2) nach ihrem Ausstoßen aus dem Rumpf bei einem Eintauchen wenigstens zeitweilig mit dem Luftfahrzeug (AC) verbunden zu halten.

3. Luftfahrzeug nach Anspruch 2, **dadurch gekennzeichnet, dass** es außerdem Mittel (35, 36) aufweist, um auf die Verbindungsmittel (16) einzuwirken, um die Bake (2) vollständig von dem Luftfahrzeug (AC) zu lösen.

4. Luftfahrzeug nach einem der vorhergehenden Ansprüche, **dadurch gekennzeichnet, dass** es wenigstens zwei Schwimmbaken (2a, 2b), Mittel, um die eine (2a) der Baken nach dem Ausstoßen aus dem Rumpf bei einem Eintauchen vollständig von dem Luftfahrzeug (AC) zu lösen, und Mittel, um die andere (2b) der Baken nach ihrem Ausstoßen aus dem Rumpf bei einem Eintauchen mit dem Luftfahrzeug (AC) verbunden zu halten, aufweist.

5. Luftfahrzeug nach einem der vorhergehenden Ansprüche, **dadurch gekennzeichnet, dass** die Bake (2) mit Hilfsmitteln (11) versehen ist, die es ermöglichen, bei ihrer Ortung zu helfen, wenn sie auf der Oberfläche (S) der Meereswasserfläche (M) schwimmt.

6. Luftfahrzeug nach einem der vorhergehenden Ansprüche, **dadurch gekennzeichnet, dass** es außerdem Mittel zur Erkennung (4) eines Eintauchens ins Wasser aufweist, und dadurch, dass die Ausstoßmittel (5) die Bake (2) bei der Erkennung eines Eintauchens durch die Erkennungsmittel (4) aus dem Rumpf ausstoßen.

7. Luftfahrzeug nach Anspruch 6, **dadurch gekennzeichnet, dass** die Erkennungsmittel (4) Mittel zum Messen der Werte wenigstens eines Parameters, der sich auf das Luftfahrzeug (AC) oder auf dessen Umgebung bezieht, und Mittel zum Vergleichen der gemessenen Werte mit einem Schwellenwert aufweisen, wobei ein Eintauchen erkannt wird, wenn ein gemessener Wert den Schwellenwert überschreitet.

8. Luftfahrzeug nach einem der vorhergehenden Ansprüche, **dadurch gekennzeichnet, dass** es außerdem eine autonome Energiequelle (12) aufweist.

9. Luftfahrzeug nach einem der vorhergehenden Ansprüche, **dadurch gekennzeichnet, dass** die Bake (2) in einem Bereich des Luftfahrzeugs (AC) ohne Druckausgleich angebracht ist, der sich in seinem oberen hinteren Teil (45) befindet.

10. Verfahren zur Hilfe bei der Lokalisierung eines Wracks eines Luftfahrzeugs in den Tiefen einer Meereswasserfläche, wobei das Verfahren wenigstens eine Bake (2) verwendet, welche geeignet ist, Signale (15A, 15B) auszusenden, die aus der Ferne geortet werden können, und welche im Inneren des Luftfahrzeugs (AC) installiert ist, wobei gemäß dem Verfahren bei einem Eintauchen des Luftfahrzeugs (AC) ins Wasser automatisch die Bake (2) ausgestoßen wird, welche außerhalb des Rumpfes des Luftfahrzeugs (AC) schwimmt, und nach dem Ausstoßen automatisch das Aussenden der Signale (15A, 15B) durch die Bake (2) ausgelöst wird, **dadurch gekennzeichnet, dass** das Ausstoßen mithilfe eines Kolbensystems durchgeführt wird, das mit einem Ausstoßrohr (22) versehen ist, das mit einem Kolben (28) ausgestattet ist, wobei der Kolben (28) einen Stanzstopfen zum Durchstoßen der Außenhaut des Luftfahrzeugs (AC) umfasst, um eine Öffnung (27) im Rumpf (18) zu erzeugen, wobei der Kolben (28) hohl ist und eine Aufnahme (29) umfasst, in welcher wenigstens die Bake (2) aufgenommen ist, und dadurch, dass der Kolben (28), wenn er seine Endlage erreicht, am Ausstoßrohr (22) zur Anlage kommt, so dass vermieden wird, dass der Kolben (28) aus der Struktur des Luftfahrzeugs (AC) ausgestoßen wird, wobei der Stanzstopfen und die Bake (2) dann gleichzeitig und getrennt durch die Öffnung (27) hindurch aus dem Luftfahrzeug (AC) ausgestoßen werden.

## Claims

1. An aircraft including a device for aiding the localization of the wreck of an aircraft submerged in a sea water expanse, said device (1) comprising at least one beacon (2) being able to emit signals (15A, 15B) able to be detected remotely and being arranged inside the aircraft (AC), and means (5) for automatically ejecting said beacon (2) floating out of the fuselage of the aircraft (AC), upon an immersion of the latter, as well as means (10) for automatically triggering the emission of said signals (15A, 15B) after said ejection,
**characterized in that** said ejection means(5) comprise a piston system including an ejection tube (22) provided with a piston (28), the piston (28) comprising a plug for stamping the skin of the aircraft (AC) in order to generate an opening (27) in the fuselage (18), the piston (28) being hollow and comprising a casing (29) wherein at least the beacon (2) is housed, and **in that**, when said piston (28) reaches the end of its stroke, it comes in abutment on the ejection tube (22) so as to prevent the piston (28) from being ejected from the structure of the aircraft (AC), the stamping plug and the beacon (2) being then ejected, simultaneously and separately.

2. The aircraft according to claim 1,
**characterized in that** it comprises linking means (16) for maintaining the beacon (2), at least temporarily, linked to the aircraft (AC), after its ejection out of the fuselage upon an immersion.

3. The aircraft according to claim 2,
**characterized in that** it comprises means (35, 36) for acting on said linking means (16) so as to release completely the beacon (2) from the aircraft (AC).

4. The aircraft according to any one of the preceding claims,
**characterized in that** it comprises at least two floating beacons (2a, 2b), means for releasing completely one (2a) of said beacons (2a, 2b) from the aircraft (AC) after its ejection out of the fuselage upon an immersion, and means for maintaining the other (2b) of said beacons (2a, 2b), linked to the aircraft (AC), after its ejection out of the fuselage upon an immersion.

5. The aircraft according to any one of the preceding claims,
**characterized in that** said beacon (2) is provided with auxiliary means (11) allowing to aid its localization, when it floats at the surface (S) of said sea water expanse (M).

6. The aircraft according to any one of the preceding claims,
**characterized in that** it comprises means (4) for detecting an immersion, and **in that** said ejection means (5) eject the beacon (2) out of the fuselage, upon the detection of an immersion by said detection means (4).

7. The aircraft according to claim 6,
**characterized in that** said detection means (4) comprise means for measuring the values of a least one parameter relative to the aircraft (AC) or to its environment and means for comparing the measured values to a threshold value, an immersion being detected when a measured value exceeds said threshold value.

8. The aircraft according to any one of the preceding claims,
**characterized in that** it comprises further an autonomous source of energy (12).

9. The aircraft according to any one of the preceding claims,
**characterized in that** said beacon (2) is mounted in an unpressurized area of the aircraft (AC), located in its upper rear part (45).

10. A method for aiding the localization of a wreck of an aircraft submerged in a sea water expanse, said method using at least one beacon (2) being able to emit signals (15A, 15B) able to be detected remotely and being installed inside the aircraft (AC), said method wherein upon an immersion of the aircraft (AC), said beacon (2) is automatically ejected floating out of the fuselage of said aircraft (AC), and after said ejection, the emission of said signals (15A, 15B) by said beacon (2) is automatically triggered,
**characterized in that** the ejection occurs with the help of a piston system including an ejection tube (22) provided with a piston (28), the piston (28) comprising a plug for stamping the skin of the aircraft (AC) in order to generate an opening (27) in the fuselage (18), the piston (28) being hollow and comprising a casing (29) wherein at least the beacon (2) is housed, and **in that**, when said piston (28) reaches the end of its stroke, it comes in abutment on the ejection tube (22) so as to prevent the piston (28) from being ejected from the structure of the aircraft (AC), the stamping plug and the beacon (2) being then ejected, simultaneously and separately, out of the aircraft (AC) thru said opening (27).
